# EUROPEAN PATENT SPECIFICATION

(11) **EP 2 581 324 B1**
(45) Date of publication and mention of the grant of the patent: **25.04.2018**
(21) Application number: 11792472.0
(22) Date of filing: 08.06.2011
(51) Int. Cl.: B65D 39/00, B23K 26/00, B65D 39/18

(54) **CORK STOPPER AND PRODUCTION METHOD THEREFOR**
KORKENSTOPFEN UND HERSTELLUNGSVERFAHREN DAFÜR
BOUCHON DE LIÈGE ET SON PROCÉDÉ DE PRODUCTION

(30) Priority: 09.06.2010 JP 2010131642
(43) Date of publication of application: 17.04.2013
(73) Proprietor: Uchiyama Manufacturing Corp., Okayama-shi Okayama 702-8004 (JP); Suntory Holdings Limited, Kita-ku Osaka-shi Osaka 530-8203 (JP)
(72) Inventor: YAMAMOTO, Tomohisa, Akaiwa-shi Okayama 701-2221 (JP); KATAYAMA, Tatsuo, Akaiwa-shi Okayama 701-2221 (JP); ANABUKI, Akihiro, Okayama-shi Okayama 702-8004 (JP); KADO, Tatsuki, Tokyo 135-0091 (JP)
(74) Representative: Vossius & Partner Patentanwälte Rechtsanwälte mbB
(86) International application number: PCT/JP2011/063112
(87) International publication number: WO 2011/155515

(56) References cited:
- WO-A1-2004/020300
- WO-A1-2006/089711
- BE-A- 537 126
- DE-A1-102006 000 854
- DE-U1- 8 600 054
- FR-A1- 2 501 636
- FR-A1- 2 748 731
- JP-A- 2006 027 663
- JP-A- 2008 155 229

## Description

### Technical Field

The present invention relates to a cork stopper used for sealing an opening of a container for a beverage, such as whiskey, brandy, Japanese sake, distilled spirit, wine or the like and to a production method therefor.

### Background Art

In addition to the cork stoppers, conventionally, stoppers used for the above-mentioned beverage containers include metal caps, plastic caps and the like. However, cork stoppers are very popular due to a luxurious image and a material texture. Seal performance achieved by the unique characteristic of elasticity and compression performance of cork is considered to be preferable for stoppers of beverage containers.

Patent Literature 1 as mentioned below discloses a container stopper wherein the outer peripheral surface of the core made of cork is covered with a synthetic resin layer mainly made of polyester resin.

In Patent Literature 1, the synthetic resin member can prevent not only adverse influence from the core but also adverse influence such as corky smell caused by naked cork, entry of various smell from the outside of the container and absorption of flavor of liquid in the container.

Patent Literature 1 also discloses a container stopper in which part of the outer surface of the layer located on the outer peripheral surface of the core is covered with silicone. Accordingly, slipping of the stopper relative to the container opening is improved and such a stopper can be easily extracted or inserted without making unpleasant sound.

A cork stopper covered with synthetic resin as mentioned above is disclosed in Patent Literature 2 and Patent Literature 3 as mentioned below.

Patent Literature 4 discloses a method and an apparatus for producing a bottle closure, which accords with the preamble of claim 1, consisting of a closure stopper and a cover applied to said stopper from the base side. This cover is composed of a sheet of at least one metal and/or alloys thereof and/or a layered composite sheet composed of two or more metals and/or alloys thereof and/or at least one plastic and/or layered composite film composed of two or more suitable plastics, which at least partly envelops the closure stopper.

### Citation List

### Patent Literature

PTL 1 : WO2004/020300A1
PTL 2 : Japanese Utility Model Publication (unexamined) 63-147456-U1
PTL 3 : Japanese Patent Publication (unexamined) 2004-231244-A
PTL 4 : WO 2006/089711 A1

### Summary of Invention

### Technical Problem

The above-mentioned .cork stoppers are fitted in the opening of the container while firmly contacting the inner surface of the opening; on the other hand, open-ability is required. One of the factors having influence on the open-ability is friction resistance caused between the circumferential surface of the cork stopper and the inner surface of the container opening to which the circumferential surface of the cork stopper contacts when the cork stopper fitted in the opening is extracted. When the friction resistance is large, the cork stopper has difficulty in extracting. On the other hand, when the friction resistance is small, the cork stopper is easily pulled out. However, there is a fear of popping of the stopper or leakage of liquid when the container tumbles over on its side. The containers are assumed to be stored under various conditions such as humidity, room temperature and so on and to be used under various conditions, for example, stoppers are provided for a long time. Therefore, an ideal cork stopper has only a little variation in open-ability without being adversely influenced by storage environments and usage conditions of containers. A wide variety of cork stoppers having stable open-ability without being influenced by storage environments and usage conditions of containers have been conventionally proposed and it is expected that a cork stopper have stable open-ability and its friction resistance caused when the cork stopper is extracted be appropriately set.

The present invention is proposed in view of the above-mentioned problems and has an object to provide a cork stopper which has stable open-ability without being adversely influenced by storage environments and usage conditions of containers while keeping seal performance which is characteristic of cork stoppers and to provide its production method.

### Solution to Problem

The cork stopper of the present invention is used for sealing a container opening. The invention is defined by a cork stopper according to appended claim 1 and by a method for producing a cork stopper according to claim 5. Preferred embodiments of a cork stopper are defined by the dependent claims 2-4. A preferred method is defined by dependent claim 6. The cork stopper comprises a cork stopper body having a molded cork body and a synthetic resin outer layer covering an outer circumference of the molded cork body and that the synthetic resin outer layer is made of a synthetic resin material treated with a roughening process on its surface.

In such a structure, the synthetic resin outer layer is treated with the roughening process on the surface, so that the contact area of the cork stopper body fitted in the container opening and the inner surface of the container opening can be reduced uniformly and appropriately. Accordingly, the friction resistance between the inner surface of the container opening and the outer circumference of the cork stopper body caused when the cork stopper is pulled out is appropriately reduced. Therefore, a cork stopper having more stable open-ability than that in the prior art can be achieved while keeping the seal performance provided by elasticity and compression performance which are unique characteristic of cork stoppers.

In the present invention, the synthetic resin outer layer can be treated with the roughening process which forms a concave-convex of Ry3µm to 600µm on its surface.

In such a structure, the friction resistance between the inner surface of the container opening and the outer circumference of the cork stopper body caused when the cork stopper is pulled out is more appropriately reduced. And a cork stopper having stable open-ability without being adversely influenced by storage environments and usage conditions of containers can be obtained.

If the surface roughness of the synthetic resin material is smaller than Ry3µm, the roughening degree is too small to appropriately reduce the contact area of the cork stopper body fitted in the container opening and the inner surface of the opening. Therefore, the friction resistance gradually increases and the open-ability is not improved so much. If the surface roughness of the synthetic resin material is larger than Ry600µm, the roughening degree is too large and the contact area of the cork stopper body of the cork stopper fitted in the container opening and the inner surface of the container opening is reduced too much. Therefore, the friction resistance becomes too small and there is a fear of popping of the stopper or leakage of liquid when the container tumbles over on its side.

In the present invention, the synthetic resin material can be polyethylene terephthalate.

In such a structure, barrier performance against corky smell becomes high and the smell is prevented from diffusing into liquid in the container.

In the present invention, the roughening process can be executed by transcribing the concave-convex surface formed on a transcribing mold or by being treated with a laser machining. In such a structure that the roughening process is executed by transcribing the concave-convex surface formed on the transcribing mold, the surface of the synthetic resin outer layer of, for example, a columnar cork stopper body can be easily executed with the roughening process. In case that the roughening process is executed by a laser process, roughening degree can be easily controlled.

In the present invention, the roughening process in case that the molded cork body has a cylindrical figure can be executed by setting the cork stopper body to a freely rotatable jig, by pressing a transcribing mold onto the outer circumference of the cork stopper body to rotate the cork stopper body together with the transcribing mold under the condition that the transcribing mold is heated and is rotating, and by transcribing the concave-convex surface onto the surface of the synthetic resin outer layer.

In such a structure, the concavo-convex degree on the surface can be uniformly and evenly transcribed to the outer circumference of the columnar cork stopper body.

In the present invention, a part of the synthetic resin outer layer can be covered with a silicone resin material, the part being arranged inside the container when the container mouth is sealed.

In such a structure, slidability of the cork stopper relative to the container opening can be further improved by the silicone resin material.

The production method for the cork stopper of the present invention comprises the steps of preparing the cork stopper body of the cylindrical figure with the synthetic resin outer layer covering an outer circumference of the molded cork body, the synthetic resin outer layer being made of synthetic resin material, setting the cork stopper body to the freely rotatable jig, and by rotating the cork stopper body together with the transcribing mold with the concave-convex surface by pressing the transcribing mold onto the outer circumference of the cork stopper body while rotating the transcribing mold, thereby transcribing the concave-convex surface onto the surface of the synthetic resin outer layer and executing the roughening process on the surface of the synthetic resin outer layer.

In such a structure, even when the cork stopper body is formed like a column and its surface to be treated with the surface roughening process is curved, the concave-convex surface can be uniformly and evenly transcribed to the circumferential surface and the cork stopper which is appropriately treated with the roughening process can be accurately produced.

### Advantageous Effects of Invention

The cork stopper of the present invention can be provided with more stable open-ability than the conventional ones while keeping seal performance obtained by elasticity and compression performance, the unique characteristics of the cork stoppers. In the production method for the cork stopper of the present invention, even when the cork stopper body is formed like a column and its surface to be treated with the surface roughening process is curved, the concave-convex surface can be uniformly and evenly transcribed to the outer circumference and a cork stopper which is appropriately treated with the roughening process can be accurately produced.

### Brief Description of Drawings

Fig.1 shows how the cork stopper is used in the first embodiment of the present invention.
Fig.2a is a fragmentary enlarged sectional view taken in the direction of the arrows substantially along the line X-X in Fig.1 and Fig.2b is a plane view diagrammatically showing a surface portion of the cork stopper wherein a part of the surface is enlarged.
Fig.3 is a modified example, which does not form part of the invention, of the cork stopper of the above-mentioned embodiment and is a view similar to the view in Fig.2a.
Fig.4a and Fig.4b are modified examples, which do not form part of the invention, of the cork stopper of the above-mentioned embodiment and are similar to the view in Fig.2b.
Fig.5a and Fig.5b are modified examples, in accordance with the invention, of the cork stopper in the above-mentioned embodiment and are similar to the view in Fig.2b.
Fig.6a and Fig.6b are modified examples, which do not form part of the invention, of the cork stopper in the above-mentioned embodiment and are similar to the view in Fig.2b.
Fig.7 is a side view showing one example of an apparatus for executing the roughening process on the surface of the synthetic resin layer of the cork stopper body of the above-mentioned cork stopper.
Fig.8 is a plane view of the apparatus shown in Fig.7.
Fig.9 is a diagrammatic flow chart for explaining one example of the production method for the above-mentioned cork stopper.
Fig.10 shows how the cork stopper is used in the second embodiment, which does not form part of the invention.
Fig.11a is a fragmentary enlarged sectional view taken in the direction of the arrows substantially along the line Y-Y in Fig. 10 and Fig. 11b is a fragmentary enlarged sectional view taken in the direction of the arrows substantially along the line Z-Z in Fig.10.

### Description of Embodiments

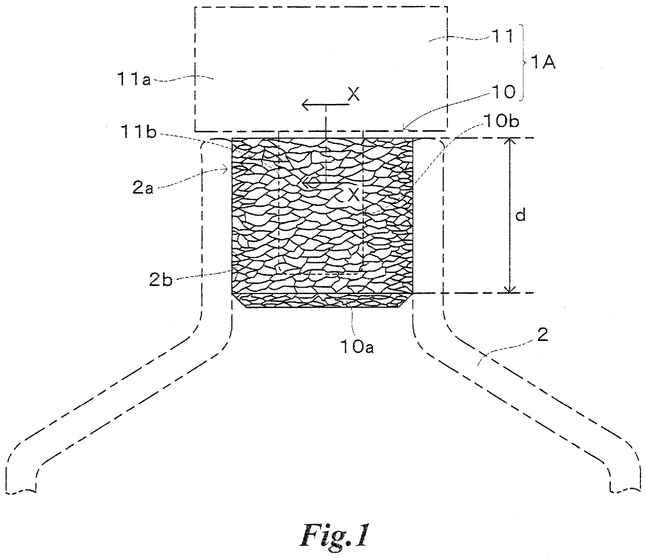

A cork stopper 1A in the first embodiment is explained referring to Fig.1 to Fig.9.

As shown in Fig.1, the cork stopper 1A is used for sealing an opening 2a of a container 2 for a beverage such as whiskey, brandy, wine or the like.

The cork stopper body 1A includes a cork stopper body 10 having a molded cork body 10a and a synthetic resin layer 12 formed by covering the circumferential surface of the molded cork body 10 with synthetic resin material. The surface of the synthetic resin layer 12 is treated with a roughening process.

The figure shows, as an example, the cork stopper 1A having the cork stopper body 10 which is fitted in the container opening 2a and a holding portion 11, a handle portion for pulling out the cork stopper body 10.

The container 2 shown with two-dotted lines is made of glass or the like and the holding portion 11 is made of glass, resin such as plastic, or wood.

The molded cork body 10a is formed by punching natural cork or by compressing and molding a lot of cork granules with binder resin and is formed columnar along the shape of the container opening 2a. The lower end of the molded cork body 10a, namely the inside of an open circumference of the container opening 2a, is chamfered in such a manner that the cork stopper body 10 is smoothly fitted in the container opening 2a. Binder resin mentioned above includes, for example, a thermosetting resin adhesive of epoxy resin or of polyurethane.

Synthetic resin material constituting the synthetic resin layer 12 formed on the circumferential surface of the molded cork body 10a includes, for example, a film and the like made of polyethylene terephthalate (PET) (hereinafter called a polyethylene terephthalate film).

In case that a polyethylene terephthalate film is used as the synthetic resin layer 12, barrier performance against corky smell becomes improved, thereby preventing diffusing of the smell into the liquid in the container 2.

The surface roughening process in this specification means a process for treating a concave-convex surface and such a process is executed on the circumferential surface (side circumferential surface) of the cork stopper body 10 which contacts an inner surface 2b of the container opening 2a when the container opening 2a is provided with the stopper. The figure shows an area "d" is treated with a roughening process (see Fig.1).

The surface of the synthetic resin layer 12 may be treated with a roughening process so as to have a surface roughness from Ry3 µm to 600 µm and such a roughening process is executed by transcribing a concave-convex surface formed on a transcribing mold as mentioned later. The process is not limited to such a transcribing process and may be executed with a laser process of carbon gas laser or a grinding process.

In case that the roughening process is executed by transcribing the concave-convex surface formed on the transcribing mold, the surface of the synthetic resin layer 12 of the columnar cork stopper body 10 can be easily treated with a roughening process. In case that such a process is executed with a laser process, roughening degree is easily controlled.

The surface roughness in the roughening process and its process flow are explained in detail later.

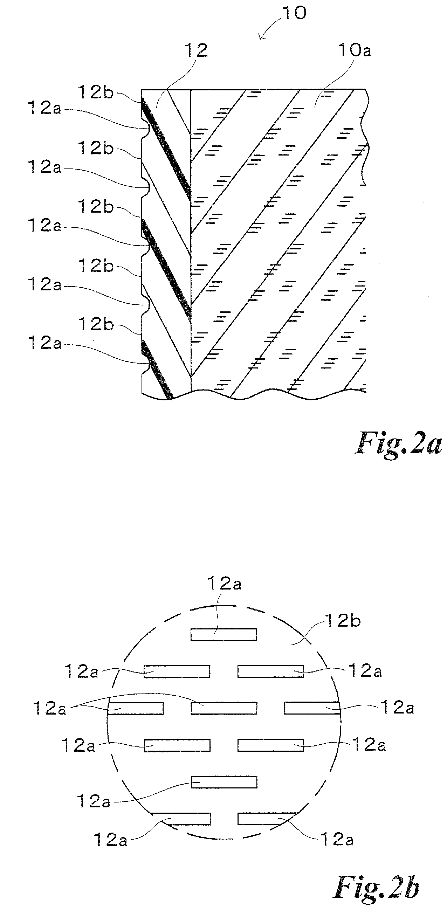

The embodiment in the figures is executed with a roughening process by transcribing the concave-convex surface formed on the transcribing mold and the reference numeral 12a indicates a concave portion and 12b indicates a flat portion in Fig.2b. The concave-convex surface in Fig.2a and Fig.2b comprises the flat portion 12b and the concave portion 12a which is formed intermittently in the circumferential direction (horizontal direction) of the cork stopper 1A and is formed transversely in a substantially linear manner. A plurality of concave portions 12a are formed intermittently in the circumferential direction (horizontal direction) and at equal intervals so as not to overlap each other. A plurality of columns of the concave portions 12a are also formed at equal intervals in the axial direction (vertical direction) of the columnar cork stopper 1A. The concave portions 12a formed in plural columns are displaced so as not to form portions only with flat portions 12b in the axial direction.

Providing the concave-convex surface by such a roughening process, the cork stopper has stable open-ability while keeping the seal performance by the flat portion 12b.

The concave portion 12a may be in the form of a half-circular section, a substantially rectangular section or a tapered side surface in a sectional view, although such embodiments are not shown in the figures.

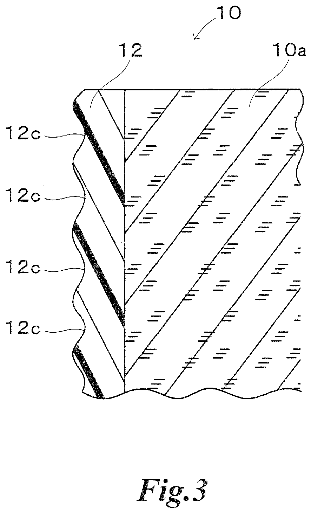

In addition, the cross-section may have a concave portion 12a having a wave-like section as shown in Fig.3.

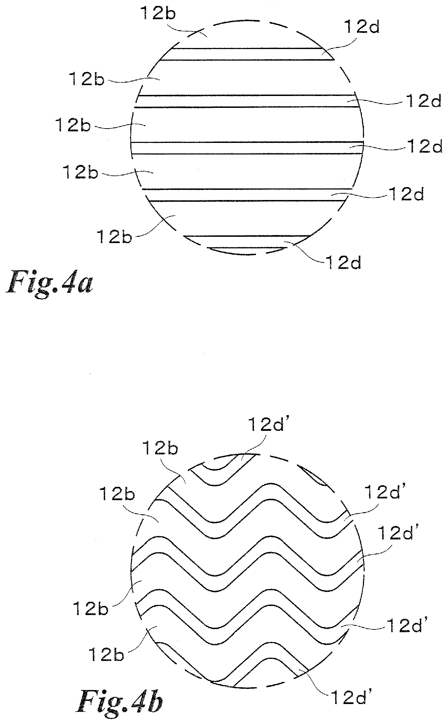

Although the sectional view of the concave-convex surface is not shown in the modified examples in Fig. 4 to Fig. 6, the surface may be constituted as mentioned above.

The shape of the concave-convex surface is not limited to Fig.2 and Fig.3 and it may be formed as shown in Fig.4 to Fig.6. Fig.4 to Fig.6 show modified examples of the first embodiment wherein the concavo-convex formed on the surface of the synthetic resin layer 12 is different. The same reference numerals are allotted to the members which are common to the above-mentioned embodiment and their explanation is omitted.

In the example shown in Fig.4a, the concave-convex surface comprises the flat portion 12b and a substantially linear continuous concave portion 12d along the entire circumference of the cork stopper body 10. The continuous concave portion 12d is appropriately formed in plural columns at equal intervals in the axial direction.

In the example shown in Fig.4b, the concave-convex surface comprises the flat portion 12b and a wavy continuous concave portion 12d' rolling up and down along the entire circumference of the cork stopper body 10. The wavy continuous concave portion 12d' is appropriately formed in plural columns at equal intervals.

By executing such a roughening process providing wavy transverse lines on the entire circumference of the cork stopper body 10, the wavy continuous concave portion 12d' alleviates strain caused by compression deformation when the stopper is provided, so that strain caused when the stopper is provided for obtaining seal performance and gas barrier performance is easily controlled.

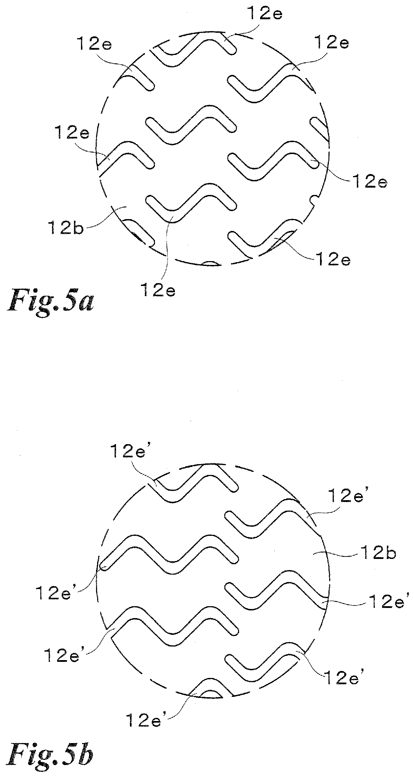

In the example shown in Fig.5a, the concave-convex surface comprises the flat portion 12b and a wavy concave portion 12e which is formed in the shape of waves intermittently in the circumferential direction of the cork stopper 1A. A plurality of wavy concave portions 12e are intermittently formed at equal intervals in the circumferential direction (horizontal direction) so as not to overlap each other and are also formed at equal intervals in the axial direction (vertical direction) of the cork stopper 1A. The wavy concave portion 12e is displaced so as not to produce a portion comprised of only the flat portion 12b in the axial direction.

By executing such a roughening process, the wavy concave portion 12e alleviates strain caused by compression deformation when the stopper is provided, so that advantageous effects similar to the example in Fig. 4b can be obtained. The larger flat portion 12b than the example in Fig.4b can be obtained, therefore, seal performance and gas barrier performance can be more easily achieved.

The example in Fig.5b is a modified example of Fig. 5a and shows the number of rollings of the intermittent wavy concave portion 12e' rolling up and down is larger than that in Fig. 5a in a plane view. Even when the number of rollings is different, the advantageous effects similar to the example in Fig.5a can be achieved.

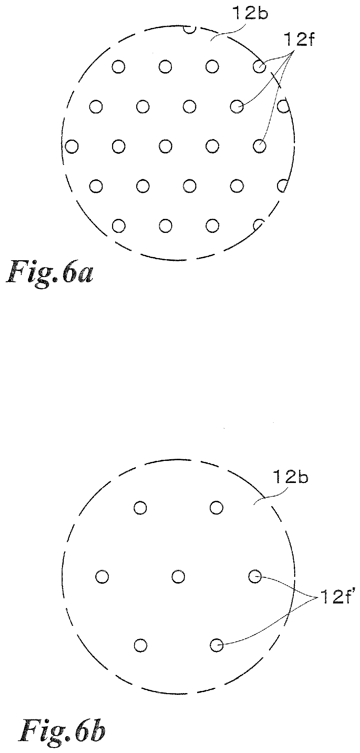

In the example shown in Fig.6a, the concave-convex surface comprises the flat portion 12b and a plurality of circular concave portions 12f which are formed circular in a plane view. The interval between the circular concave portions 12f in the axial direction is not particularly limited. The distance between the circular concave portions 12f may be larger than that in the circumferential direction as shown in Fig.6a and the area of the flat portion 12b is secured in order to have more stable open-ability while keeping seal performance. The diametrical dimension and the number of the circular concave portions 12f are not limited to those shown in the figure and the area of a circular concave portion 12f' may be reduced in accordance with the shape and the like of the cork stopper body 10 as shown in Fig.6b.

In the above-mentioned structure, the surface of the synthetic resin layer 12 is executed with a roughening process while keeping seal performance which is unique characteristic of the cork stopper, so that the contact area of the fitted cork stopper body 10 and the inner surface 2b of the container opening 2a can be appropriately and uniformly reduced in each example. Therefore, the friction resistance can be appropriately reduced between the inner surface 2b of the container opening 2a and the circumferential surface of the cork stopper body 10 caused when the cork stopper 1A is extracted for opening.

As a result, the cork stopper 1A can have more stable open-ability than conventional ones while keeping seal performance obtained by elasticity and compression performance which are unique characteristics of the cork stopper without having adverse effects caused by storage environments and usage conditions of containers.

The synthetic resin layer 12 is formed on the entire side circumferential surface of the molded cork body 10a via an adhesive layer (not shown) and is preferably made of polyethylene terephthalate as mentioned above. However, the synthetic resin layer 12 is not limited to polyethylene terephthalate and may be made of polyester resin, polypropylene (for example, PP, OPP, CPP, bonding of OPP and CPP) or a resin film made of nylon. The adhesive layer may be formed by bonding a resin-base adhesive film such as urethane, polyurethane, polyethylene, polyamide, polyester, or the like or formed by applying an adhesive agent. If the synthetic resin layer 12 is formed not only at a portion of the circumferential surface of the molded cork body 10a which contacts the inner surface 2b of the container opening 2a but also at a portion thereof on the bottom side (opposite to the holding portion 11) of the molded cork body 10a, the bottom contacting the liquid in the container, corky smell is prevented from diffusing to the liquid.

The cross-section of the holding portion 11 is formed like the letter T as shown in Fig.1 and the holding portion 11 comprises a handgrip portion 11a and a base portion 11b which is fitted in a recess portion 10b of the molded cork body 10a. When the base portion 11b is applied with an adhesive agent on the circumferential surface and is fitted in the recess portion 10b, the molded cork body 10a and the holding portion 11 can be firmly fixed.

Therefore, when the handgrip portion 11a of the holding portion 11 is held and the cork stopper 1A is pulled out upward, the cork stopper body 10 fitted in the container opening 2a can be smoothly pulled out.

On the other hand, an adhesive agent may be applied on the recess portion 10b of the molded cork body 10a and the base portion 11b may be fitted therein.

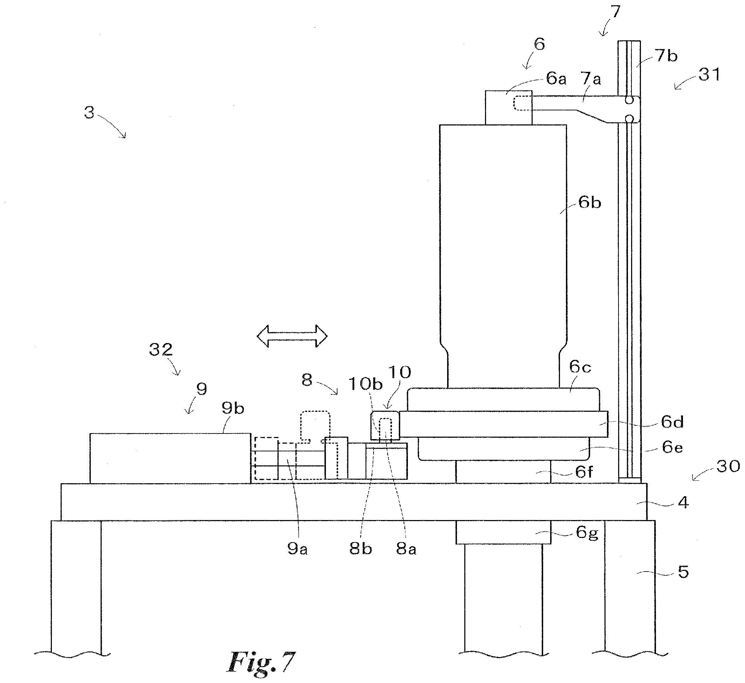

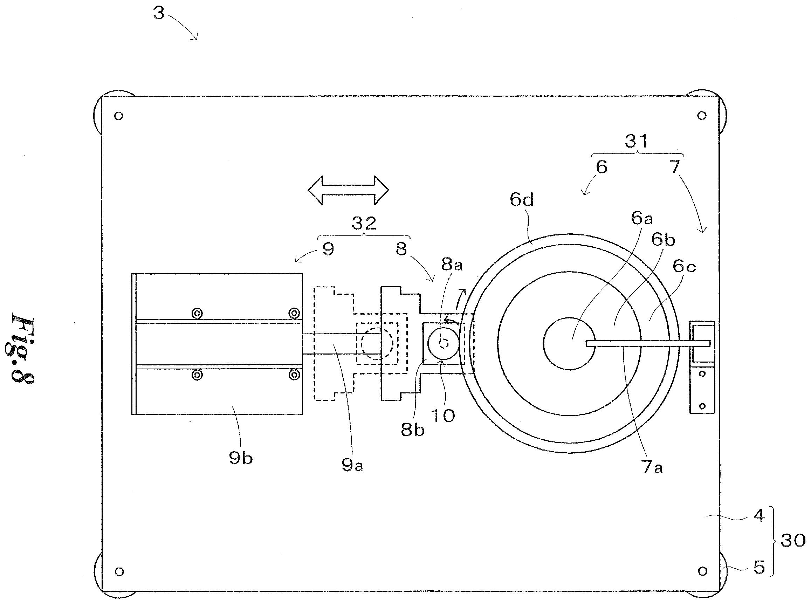

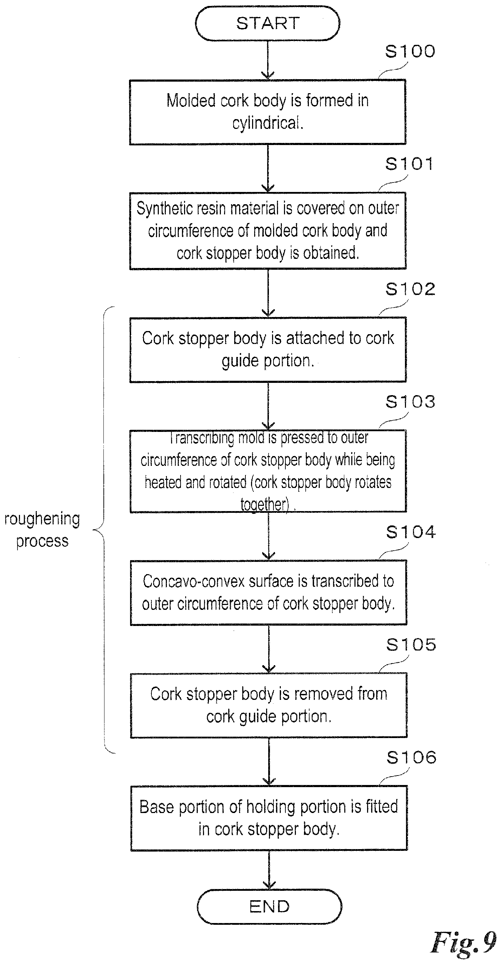

One example of the production procedure of the cork stopper 1A of the first embodiment is explained referring to Fig. 7 and Fig. 8 which show a process apparatus for roughening the cork stopper body 10 and to Fig.9 which shows a flow chart.

A process apparatus 3 has a base 30, a concavo-convex transcribing portion 31 and a cylinder 32 with a guide.

The table-type base 30 has a rectangular plate body 4 in a plane view and four legs 5 supporting the corners of the plate body 4.

The concavo-convex transcribing portion 31 has a roller portion 6 for making a transcribing mold 6d rotatable and a support portion 7 supporting the roller portion 6. The roller portion 6 has a rotation-stop ring 6a, a tubular connection portion 6b, a heater roller 6c, the transcribing mold 6d, an insulation plate 6e, a roller shaft 6f, and a bearing holder 6g. The roller portion 6 further has a motor (not shown) for axially rotating the roller shaft 6f under the bearing holder 6g. By such a structure the transcribing mold 6d becomes rotatable while being heated. The transcribing mold 6d has a desirable concave-convex surface to be formed on the surface of the synthetic resin layer 12. The support portion 7 has a stopper 7a and a support pillar 7b and functions to stop rotation of the roller portion 6.

The cylinder portion 32 with a guide constitutes a freely rotatable jig to which the cork stopper body 10 is attached and has a cork guide portion 8 and a cylinder 9. The cork guide portion 8 has a cork shaft portion 8a to which the cork stopper body 10 is attached and a cork board 8b which constitutes a freely rotatable turntable, with the cork shaft portion 8a being provided in the vertical direction.

The cylinder 9 has an extendable and pneumatic cylinder rod 9a and a cylinder body 9b. The cylinder rod 9a is capable of reciprocating the cork guide portion 8 in the direction of the roller portion 6 and in the direction of the cylinder body 9b by driving the cylinder body 9b (refer to outlined arrows in Fig.7 and Fig.8). By such a structure, the circumferential surface of the cork stopper body 10 attached to the cork shaft portion 8a can be pressed to the transcribing mold 6d.

The cork shaft portion 8a is formed so as to have substantially the same diameter as the recess portion 10b of the cork stopper body 10. The driving mechanism of the cylinder 9 is not limited to be pneumatic and may be of solenoid type (electrically operated) as long as the cork stopper body 10 can be appropriately pressed to the transcribing mold 6d and the load at the time of pressing can be controlled.

First, the molded cork body 10a is formed (Fig.9, S100). The molded cork body 10a is formed by punching natural cork into a columnar shape. The forming method for the molded cork body 10a is not limited to such a method and a lot of cork granules may be compressed and molded with binder resin into a columnar shape.

Next, a polyethylene adhesive film is heat-sealed on the circumferential surface of the molded cork body 10a in advance. A polyethylene film constituting a polyethylene layer is attached to the inside of the polyethylene terephthalate film forming the synthetic resin layer 12 in advance using a urethane adhesive agent by a dry laminate method.

Then, the circumferential surface of the molded cork body 10a is covered with the polyethylene terephthalate film and is fitted under pressure into a heated mold having smaller diameter than the outer diameter of the molded cork body 10a.

When the molded cork body 10a is removed from the mold, the polyethylene terephthalate film is adhered on the molded cork body 10a while being stretched thereon by resilience of the molded cork body 10a, thereby obtaining the cork stopper body 10 having the synthetic resin layer 12 (Fig.9, S101).

At this time, the polyethylene adhesive film functioning as an adhesion formative layer on the molded cork body 10a side and the polyethylene film functioning as an adhesion formative layer on the side coated film side of the polyethylene terephthalate film are heat-sealed and integrated. Therefore, the polyethylene terephthalate film is firmly adhered on the entire circumferential surface of the molded cork body 10a.

The recess portion 10b is fitted in the cork shaft portion 8a and the cork stopper body 10 is attached to the cork guide portion 8 (Fig.9, S102).

The transcribing mold 6d is heated and rotated before the cork stopper body 10 is pressed.

After the cork stopper body 10 is attached to the cork guide portion 8, the cylinder 9 is driven and the circumferential surface of the cork stopper body 10 is pressed to the transcribing mold 6d heated by the heat roller 6c. The cork stopper body 10 is rotated together with the cork guide portion 8 around the axial center of the cork shaft portion 8a by pressing the heated rotating transcribing mold 6d to the circumferential surface of the cork stopper body 10 (Fig. 9, S103). Then, the concave-convex surface of the transcribing mold 6d is transcribed to the circumferential surface of the columnar cork stopper body 10 (Fig.9, S104).

In Fig.7 and Fig. 8, the cylinder 9 is driven and the transcribing mold 6d is pressed to the circumferential surface of the cork stopper body 10 and the dotted lines show that the cork stopper body 10 is attached to the cork shaft portion 8a.

The concave-convex surface is thus transcribed to the circumferential surface of the cork stopper body 10 and the cork stopper body 10 is picked out of the cork shaft portion 8a and is removed from the cork guide portion 8 after the roughening process (Fig.9, S105). The base portion 11b of the holding portion 11 applied with an adhesive agent is fitted in the recess portion 10b (Fig.9, S106). Then the base portion 11b is fixed to the recess portion 10b, thereby obtaining the cork stopper 1A.

In the production method for the cork stopper 1A as mentioned above, even when the cork stopper 1A is formed columnar and the surface to be treated with a roughening process is curved, the concave-convex surface can be transcribed to the circumferential surface of the cork stopper body 10 uniformly and evenly. Namely, the cork stopper 1A of which surface roughness on the circumferential surface of the cork stopper body 10 does not largely differ in each portion can be accurately produced, enabling mass production.

The surface of the synthetic resin layer 12 is preferably processed to have surface roughness of Ry3µm to 600µm as mentioned above. Preferably, the surface roughness is Ry3µm to 50µm.

In such a structure, the friction resistance caused between the inner surface 2b of the container opening 2a and the circumferential surface of the cork stopper body 10 when the cork stopper 1A is pulled out can be more appropriately reduced. And the cork stopper 1A having stable open-ability can be produced without being adversely influenced by storage environments and usage conditions of the container 2.

For example, even in such a condition that the room temperature in the storage environment of the container 2 is high, the inner pressure in the container 2 increases and the stopper may pop, appropriate friction resistance is produced between the inner surface 2b of the container opening 2a and the circumferential surface of the cork stopper body 10, thereby inhibiting popping of the stopper.

Namely, if the circumferential surface of the cork stopper body 10 is treated with a roughening process as mentioned above, variation of open-ability can be inhibited. Therefore, the cork stopper 1A can be provided with stable open-ability regardless of storage environments and usage conditions of the containers. When the surface roughness of the surface of the synthetic resin layer 12 is smaller than Ry3µm, the roughness degree is too small to appropriately reduce the contact area of the cork stopper body 10 of the fitted cork stopper 1A and the inner surface 2b of the container opening 2a. Therefore, the friction resistance intends to be larger and the open-ability is not improved. On the other hand, when the surface roughness is larger than Ry600 µm, the roughness degree becomes too large and the contact area of the cork stopper body 10 of the fitted cork stopper 1A and the inner surface 2b of the container opening 2a is reduced too much. Therefore, the friction resistance intends to be too small and there is a fear of popping of the stopper or leakage of liquid when the container 2 tumbles over on its side.

The configuration of the concave-convex surface formed on the transcribing mold 6d corresponds to the concave-convex surface on the circumferential surface of the cork stopper body 10 and is not specifically limited. It has been found that the above-mentioned advantageous effects can be achieved when the circumferential surface of the cork stopper body 10 is roughened after the inventors have produced cork stoppers 1A with several concave-convex surfaces and have tried to open the stoppers. The production method, the roughening process method, and the structure of the process apparatus 3 are not limited to those mentioned in the above embodiments. In the embodiment only the circumferential surface of the cork stopper body 10, namely the surface contacting the inner surface 2b of the container opening 2a, is formed with the synthetic resin layer 12; however, when the roughening process is executed on the bottom side of the cork stopper body 10 contacting the liquid in the container (opposite to the holding portion 11), the same process can be used.

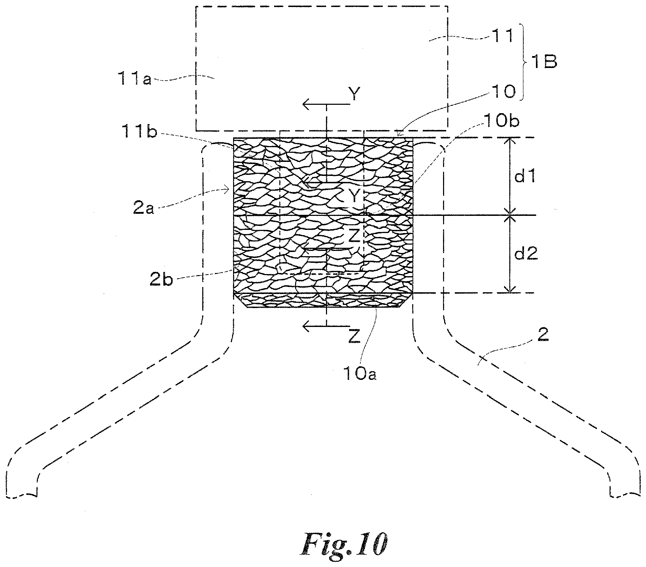

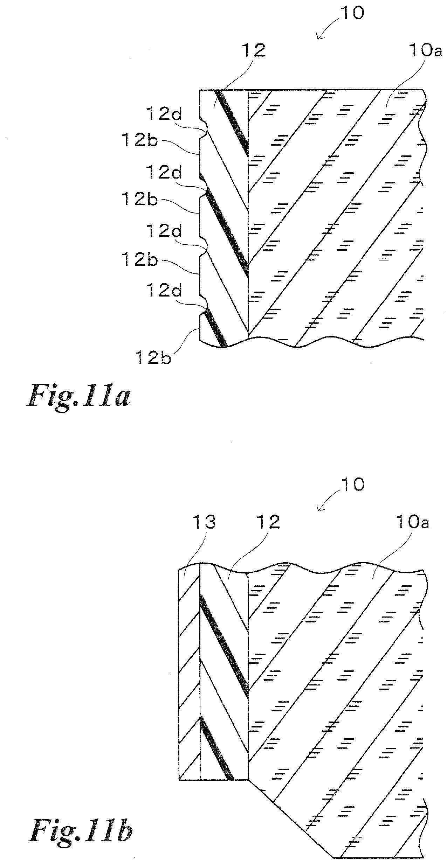

Next, a cork stopper body 1B of the second embodiment is explained referring to Fig.10, Fig.11a, and Fig.11b. The same reference numerals are allotted to the members which are common to the first embodiment and their explanation is omitted.

The cork stopper body 1B is different from the first embodiment in that a part of the surface of the synthetic resin layer 12 positioned on the inner side of the container 2 (on the side of the liquid inside the container) when the container opening 2a is blocked up is covered with a silicone resin material. As shown in the fragmentary sectional view taken in the direction of the arrows along the line Z-Z in Fig.10 and Fig.11b, the surface of the synthetic resin layer 12 made of polyethylene terephthalate is covered with a silicone layer 13 made of a silicone resin material.

The configuration of the concave-convex surface formed on the cork stopper body 10 is not specifically limited as mentioned in the first embodiment. In this embodiment, the transverse concave-convex surface similar to Fig. 4a in the first embodiment is formed. The circumferential surface of the cork stopper body 10 is provided with a continuously formed transverse concavo-convex pattern in the circumferential direction as shown in the fragmentary sectional view of Fig.11a taken in the direction of the arrows along the line Y-Y in Fig.10. In Fig.11a the reference numeral 12d indicates a substantially linear continuous concave portion along the entire circumference of the cork stopper body 10 and the reference numeral 12b indicates the flat portion between the continuous concave portions 12d. When the roughening process is executed for providing transverse lines on the entire circumferential surface of the cork stopper body 10 (refer to Fig.11a), the cork stopper can be provided with more stable open-ability while keeping seal performance like the embodiment shown in Fig.4a.

Of course the continuous concave portion 12d is not limited to be substantially linear like Fig.4a, and may be the wavy continuous concave portion 12d' rolling up and down. In addition to the intermittent transverse concave-convex surface as shown in Fig.2a and Fig.2b, the concave-convex surfaces can be applied as shown in Fig.3, Fig. 5a, Fig. 5b, Fig.6a, and Fig. 6b.

The circumferential surface of the cork stopper body 10 is covered with the synthetic resin layer 12 made of polyethylene terephthalate on the outermost layer of an area d1 and is covered with a silicone layer 13 made of a silicone resin material on the outermost layer of an area d2.

In such a structure, the synthetic resin layer 12 can improve gas-barrier performance, prevent corky smell and prevent smell from diffusing into the liquid in the container, and the silicone layer 13 can improve slidability relative to the container opening 2a. Namely, advantageous effects of the synthetic resin layer 12 and the silicone layer 13 generate synergetic results; in addition, the friction resistance caused between the inner surface 2b of the container opening 2a and the circumferential surface of the cork stopper body 10 can be appropriately reduced because the surface of the synthetic resin layer 12 is treated with the roughening process.

Furthermore, like the first embodiment, the cork stopper can have more stable open-ability while keeping seal performance obtained by elasticity and the compression performance which are unique characteristics of cork without having adverse effect caused by storage environments and usage conditions of containers.

Next, one example of the production procedure of the cork stopper 1B of the second embodiment is explained focusing the difference with the first embodiment.

The same process apparatus as that in the first embodiment can be used for roughening the surface of the cork stopper 1B; however, the concave-convex surface on the transcribing mold 6d is designed so as to form the transverse concave-convex surface as shown in Fig.11a. The entire area "d" of the cork stopper body 10 is treated with the roughening process in the first embodiment, while the transcribing mold 6d is pressed on only the area d1 of the cork stopper body 10 for executing the roughening process in the second embodiment.

Like the example in the first embodiment, the molded cork body 10a of the cork stopper body 1B is formed, the circumferential surface of the molded cork body 10a is covered with the polyethylene terephthalate film and the synthetic resin layer 12 is integrally adhered on the molded cork body 10a. Then silicone elastomer is applied on the area d2 and a silicone layer 13 is formed.

When the synthetic resin layer 12 and the silicone layer 13 are firmly adhered on the circumferential surface of the molded cork body 10a and the cork stopper body 10 is formed, the recess portion 10b is fitted in the cork shaft portion 8a and the cork stopper body 10 is attached to the cork guide portion 8.

The transcribing mold 6d is heated and rotated before the cork stepper body 10 is pressed.

After the cork stopper body 10 is attached to the cork guide portion 8, the cylinder 9 is driven and the cork stopper body 10 is pressed to the transcribing mold 6d heated by the heat roller 6c. The cork stopper body 10 is also rotated by pressing the heated and rotating transcribing mold 6d to the circumferential surface of the cork stopper body 10. Then the concave-convex surface of the transcribing mold 6d is transcribed to the circumferential surface of the columnar cork stopper body 10.

Thus, the concave-convex surface is transcribed to the surface of the synthetic resin layer 12 and roughening process is executed, thereafter the cork stopper body 10 is removed out of the cork shaft portion 8a and the base portion 11b of the holding portion 11 applied with an adhesive agent is fitted in the recess portion 10b. When the base portion 11b is fixed to the recess portion 10b, the cork stopper body 1B is produced.

The area d1 is roughened by the transcribing mold 6d which is heated after the silicone layer 13 is formed, thereby preventing reduction of the advantageous effects of the concavo-convex transcribing process when the cork stopper body 10 entirely swells or the synthetic resin layer 12 becomes soft due to heating.

In the above-mentioned production method, the cork stopper 1B which is appropriately treated with the roughening process can be accurately produced, enabling mass production, as mentioned in the first embodiment. In addition, the degree of the roughening process to be executed on the area d1 is such that the surface roughness is preferably from Ry3µm to 600µm, or the area d1 is more minutely processed preferably from Ry3µm to 50 µm, as mentioned in the first embodiment.

The shape and structure of the cork stoppers 1A, 1B are not limited to the above-mentioned examples. The stoppers may be in the form of a rectangular column or may not have the holding portion 11. The production methods for the cork stoppers 1A, 1B are not limited to the above-mentioned examples. In addition, the shape of the container 2 is not limited to the ones shown in the figures.

The liquid in the container 2 is mainly alcohol beverages in the above-mentioned examples; however, the liquid is not limited and may be beverages such as juice and the like. In addition to application to beverages, the present invention can be applied to cork stoppers for blocking up the openings of the containers for everything such as foods or cosmetics.

### Reference Signs List

- 1A, 1B: cork stopper
- 3: process apparatus
- 6d: transcribing mold
- 10: cork stopper body
- 10a: molded cork body
- 12: synthetic resin layer
- 13: silicone layer
- 2a: opening

## Claims

1. A cork stopper (1A, 1B) used for sealing a container opening (2a), wherein
(a) said cork stopper (1A, 1B) comprises a cork stopper body (10) having a molded cork body (10a) and a synthetic resin outer layer (12) covering the circumferential surface of said molded cork body (10a);
**characterized in that**
(b) the surface of said synthetic resin outer layer (12) is treated with a roughening process and has a concave-convex surface comprising a flat portion (12b) and a plurality of concave portions (12a, 12e),
(c) said concave portions (12a, 12e) are formed in columns at equal intervals in the axial direction and are displaced so as not to form portions only with flat portions (12b) in the axial direction of the cork stopper (1A, 1B), and **in that**
(d) said plurality of concave portions (12a) are formed in a substantially linear manner intermittently at equal intervals in the circumferential direction of said cork stopper (1A, 1B) so as not to overlap each other, or
(e) said plurality of concave portions (12e) are wavy concave portions which are formed in the shape of waves intermittently at equal intervals in the circumferential direction of the cork stopper (1A, 1B) so as not to overlap each other.

2. The cork stopper (1A, 1B) as set forth in claim 1, **characterized in that** said synthetic resin outer layer (12) is treated with the roughening process which forms a concave-convex of Ry 3µm to 600µm on its surface.

3. The cork stopper (1A, 1B) as set forth in claims 1 or 2, **characterized in that** said synthetic resin material is polyethylene terephthalate.

4. The cork stopper (1B) as set forth in any one of claims 1 to 3, **characterized in that** a part of said synthetic resin outer layer (12) is covered with a silicone resin material, said part being arranged inside said container (2) when said container mouth (2a) is sealed.

5. A method for producing a cork stopper (1A, 1B) of any one of claims 1 to 4, said method comprising the steps of:
(a) preparing a cork stopper body (10) of a cylindrical figure with a synthetic resin outer layer (12) covering an outer circumference of said molded cork body (10a), said synthetic resin outer layer (12) being made of a synthetic resin material;
(b) setting said cork stopper body (10) to a freely rotatable jig;
(c) rotating said cork stopper body (10) together with a transcribing mold (6d) with a concave-convex surface by pressing said transcribing mold (6d) onto said outer circumference of said cork stopper body (10) while rotating said transcribing mold (6d), thereby transcribing said concave-convex onto the surface of said synthetic resin outer layer (12), and
(d) executing a surface roughening finish on said surface of said synthetic resin outer layer (12).

6. The method as set forth in claim 5, **characterized in that** said surface roughening finish is executed by laser machining.

## Patentansprüche

1. Korkstopfen (1A, 1B), der zum Abdichten einer Behälteröffnung (2a) verwendet wird, wobei
(a) der Korkstopfen (1A, 1B) einen Korkstopfenkörper (10) aufweist, der einen geformten Korkkörper (10a) und eine Kunstharzaußenschicht (12) aufweist, die die Umfangsfläche des geformten Korkkörpers (10a) bedeckt;
**dadurch gekennzeichnet, dass**
(b) die Oberfläche der Kunstharzaußenschicht (12) mit einem Aufrauungsprozess behandelt wird und eine konkav-konvexe Oberfläche aufweist, die einen flachen Abschnitt (12b) und eine Mehrzahl von konkaven Abschnitten (12a, 12e) aufweist,
(c) die konkaven Abschnitte (12a, 12e) in Spalten in gleichen Abständen in die Achsenrichtung ausgebildet und versetzt sind, um keine Abschnitte mit nur flachen Abschnitten (12b) in die Achsenrichtung des Korkstopfens (1A, 1B) zu bilden, und dass
(d) die Mehrzahl der konkaven Abschnitte (12a) in einer im Wesentlichen linearen Weise intermittierend in gleichen Abständen in die Umfangsrichtung des Korkstopfens (1A, 1B) so ausgebildet sind, dass sie sich gegenseitig nicht überlappen, oder
(e) die Mehrzahl der konkaven Abschnitte (12e) wellige konkave Abschnitte sind, die in der Form von Wellen intermittierend in gleichen Abständen in die Umfangsrichtung des Korkstopfens (1A, 1B) so ausgebildet sind, dass sie sich gegenseitig nicht überlappen.

2. Korkstopfen (1A, 1B) nach Anspruch 1, **dadurch gekennzeichnet, dass** die Kunstharzaußenschicht (12) mit dem Aufrauungsprozess behandelt wird, der eine Konkavität-Konvexität mit Ry von 3 µm bis 600 µm auf seiner Oberfläche bildet.

3. Korkstopfen (1A, 1B) nach Anspruch 1 oder 2, **dadurch gekennzeichnet, dass** das Kunstharzmaterial Polyethylenterephthalat ist.

4. Korkstopfen (1B) nach einem der Ansprüche 1 bis 3, **dadurch gekennzeichnet, dass** ein Teil der Kunstharzaußenschicht (12) mit einem Silikonharzmaterial bedeckt ist, wobei der Teil innerhalb des Behälters (2) angeordnet ist, wenn die Behälteröffnung (2a) abgedichtet ist.

5. Verfahren zum Herstellen eines Korkstopfens (1A, 1B) nach einem der Ansprüche 1 bis 4, wobei das Verfahren die Schritte aufweist:
(a) Vorbereiten eines Korkstopfenkörpers (10) mit einer zylindrischen Gestalt mit einer Kunstharzaußenschicht (12), die einen Außenumfang des geformten Korkkörpers (10a) bedeckt, wobei die Kunstharzaußenschicht (12) aus einem Kunstharzmaterial hergestellt ist;
(b) Setzen des Korkstopfenkörpers (10) auf eine frei drehbare Aufspannvorrichtung;
(c) Drehen des Korkstopfenkörpers (10) zusammen mit einer Übertragungsform (6d) mit einer konkav-konvexen Oberfläche durch Drücken der Übertragungsform (6d) auf den Außenumfang des Korkstopfenkörpers (10), während die Übertragungsform (6d) gedreht wird, wodurch diese Konkavität-Konvexität auf die Oberfläche der Kunstharzaußenschicht (12) übertragen wird, und
(d) Durchführen einer Aufrauungsoberflächenbehandlung an der Oberfläche der Kunstharzaußenschicht (12).

6. Verfahren nach Anspruch 5, **dadurch gekennzeichnet, dass** die Aufrauungsoberflächenbehandlung durch Laserbearbeitung durchgeführt wird.

## Revendications

1. Bouchon de liège (1A, 1B) servant à obturer une ouverture de récipient (2a),
(a) ledit bouchon de liège (1A, 1B) comprenant un corps (10) de bouchon de liège ayant un corps en liège moulé (10a) et une couche extérieure en résine synthétique (12) recouvrant la surface circonférentielle du corps en liège moulé (10a);
**caractérisé en ce que**
(b) la surface de la couche extérieure en résine synthétique (12) est traitée au moyen d'un procédé de rugosification et a une surface convexe-concave présentant une section plane (12b) et une pluralité de sections concaves (12a, 12e),
(c) les sections concaves (12a, 12e) sont formées en colonnes avec un espacement constant dans la direction axiale et sont décalées de telle manière à ne pas former de parties comprenant seulement des sections planes (12b) dans la direction axiale du bouchon de liège (1A, 1B), et **en ce que**
(d) les plusieurs sections concaves (12a) sont formées sensiblement linéairement et par intermittences avec un espacement constant dans la direction circonférentielle du bouchon de liège (1A, 1B) de manière à ne pas se chevaucher l'une l'autre, ou
(e) les plusieurs sections concaves (12e) sont des sections concaves ondulées en forme de vagues et par intermittences avec un espacement constant dans la direction circonférentielle du bouchon de liège (1A, 1B) de manière à ne pas se chevaucher l'une l'autre.

2. Bouchon de liège (1A, 1B) selon la revendication 1, **caractérisé en ce que** la couche extérieure en résine synthétique (12) est traitée au moyen du procédé de rugosification qui forme superficiellement une concavité-convexité sur la surface de Ry compris entre 3 µm et 600 µm.

3. Bouchon de liège (1A, 1B) selon la revendication 1 ou la revendication 2, **caractérisé en ce que** la résine synthétique est en polyéthylène téréphtalate.

4. Bouchon de liège (1B) selon l'une des revendications 1 à 3, **caractérisé en ce qu'**une partie de la couche extérieure en résine synthétique (12) est recouverte d'une résine de silicone, ladite partie étant présentée à l'intérieur du récipient (2) quand l'embouchure du récipient (2a) est obturée.

5. Procédé de production d'un bouchon de liège (1A, 1B) selon l'une des revendications 1 à 4, ledit procédé comprenant les étapes suivantes :
(a) préparation d'un corps (10) de bouchon de liège de forme cylindrique, avec une couche extérieure en résine synthétique (12) recouvrant une circonférence extérieure du corps en liège moulé (10a), ladite couche extérieure en résine synthétique (12) étant composée d'un matériau en résine synthétique ;
(b) la monture du corps (10) de bouchon de liège sur un gabarit librement rotatif ;
(c) la rotation du corps (10) de bouchon de liège avec un moule de transfert (6d) de surface convexe-concave par pression du moule de transfert (6d) sur la circonférence extérieure du corps (10) de bouchon de liège pendant la rotation du moule de transfert (6d), en transférant ainsi la concavité-convexité sur la surface de la couche extérieure en résine synthétique (12), et
(d) l'exécution d'une finition de rugosité superficielle sur le surface de la couche extérieure en résine synthétique (12).

6. Procédé selon la revendication 5, **caractérisé en ce que** la finition de rugosité superficielle est exécutée par usinage par laser.
